# EUROPÄISCHE PATENTANMELDUNG

(11) **EP 2 530 274 A2**
(43) Veröffentlichungstag der Anmeldung: **05.12.2012**
(21) Anmeldenummer: 12004029.0
(22) Anmeldetag: 24.05.2012
(51) Int. Cl.: F02B 37/00, F02B 37/04, F02B 39/10

(54) **Aufgeladene Brennkraftmaschine**

(30) Priorität: 30.05.2011 DE 102011102817
(71) Anmelder: Udo Mailänder GmbH, D-74321 Bietigheim-Bissingen (DE)
(72) Erfinder: Mailänder, Udo, 74321 Bietigheim-Bissingen (DE)
(74) Vertreter: Schiering, Hans

(57) **Zusammenfassung**

Aufgeladene Brennkraftmaschine mit einem Abgassammler (12) und einem Ladeluftsammler (13) jeweils für sämtliche Brennräume, mehreren in Abhängigkeit von der Leistung der Brennkraftmaschine gestaffelt mit ihrer Abgasturbine (17) an den Abgassammler (12) über je ein Abgasventil (18) anschaltbaren und abschaltbaren Abgasturboladern (14, 15, 16), einem von einem gesonderten Motor (31) angetriebenen Hilfskompressor (32), Ventileinrichtungen zum Umsteuern der Überbrückungsluft des Hilfskompressors (32) und der Verdichterluft des im Staffelbetrieb hinzutretenden jeweiligen Abgasturboladers (14, 15, 16) wobei jede Ventileinrichtung ein zwischen dem Ladeluftausgang des Verdichters (28) des Abgasturboladers (14, 15, 16) und dem Ladeluftsammler (13) eingefügtes Hauptluftventil (26) und ein zwischen dem Ladeluftausgang des Verdichters (28) und dem Hauptluftventil (26) angeschlossenes und zum Lufteingang des Hilfskompressors (32) führendes Hilfsluftventil (27) aufweist und der Hilfskompressor (32) ausgangsseitig an den Ladeluftsammler (13) angeschlossen ist.

## Beschreibung

Die Erfindung bezieht sich auf eine aufgeladene Brennkraftmaschine mit einem Abgassammler und einem Ladeluftsammler jeweils für sämtliche Brennräume, mehreren in Abhängigkeit von der Leistung der Brennkraftmaschine gestaffelt mit ihrer Abgasturbine an den Abgassammler über je ein Abgasventil anschaltbaren und abschaltbaren Abgasturboladern, einem von einem gesonderten Motor angetriebenen Hilfskompressor, Ventileinrichtungen zum Umsteuern der Überbrückungsluft des Hilfskompressors und der Verdichterluft des im Staffelbetrieb hinzutretenden jeweiligen Abgasturboladers in Abhängigkeit von der Drehzahl dieses Abgasturboladers und dem Ladeluft-Arbeitsdruck und mit einem Rechner mit abgespeichertem Anforderungsprofil zum Schalten der Abgasventile, der Ventileinrichtungen und des Motors des Hilfskompressors.

Durch die Zuhilfenahme der Aufladung läßt sich in einem kleinen Verbrennungsmotor die Leistung eines ansonsten erheblich größeren Verbrennungsmotors verwirklichen. Im Falle einer vorgegebenen Nennleistung kann der Motor aufgrund seiner Aufladung beträchtlich verkleinert werden. Bei der Aufladung von Verbrennungsmotoren mit Abgasturboladern ergibt sich der Zielkonflikt, daß einerseits durch die Aufladung eine Steigerung der Nennleistung ermöglicht wird und andererseits dazu die geometrisch-mechanische Verdichtung proportional zur gewünschten Nennleistungssteigerung herabgesetzt werden muß. Durch die Herabsetzung der geometrisch-mechanischen Verdichtung läßt aber die Leistung bzw. das Drehmoment des aufgeladenen Verbrennungsmotors im unteren Drehzahlbereich überproportional nach, was auf die bei Abgasturboladern sehr spitzige Leistungskurve in ihrem eigenen Betriebsdrehzahldiagramm zurückzuführen ist. Eine Strömungsmaschine kann nur innerhalb eines sehr schmalen Drehzahlbereichs eine optimale Strömung und damit eine hohe Leistung erbringen. Das ist das Gegenteil dessen, was man beim Verbrennungsmotor in Landfahrzeugen für die Darstellung einer Zugkrafthyperbel anstrebt. Durch den Einsatz mehrerer Abgasturbolader kann jedoch sowohl die Betriebsdrehzahlspanne des Verbrennungsmotors als auch die spezielle volumetrische Arbeitsgröße des Abgasturboladers aufgeteilt werden. Das demzufolge zeitlich versetzte Hinzuschalten der Abgasturbolader führt allerdings leicht das Aufladesystem in den Bereich des Pumpens und zum Zusammenbruch der Ladeluftströmung im hinzugeschalteten Verdichter, wenn beispielsweise die vom zweiten Verdichter mit sehr geringem Druck zunächst über ein Abblaseventil ins Freie strömende Luft in den bereits unter dem vollen Druck des ersten Verdichters stehenden Ladeluftsammler des Verbrennungsmotors gelangen soll, also von einer Strömungsmaschine mit relativ großer Strömungsgeschwindigkeit und geringer Druckaufbaumöglichkeit zu einer Kolbenmaschine mit relativ kleiner Strömungsgeschwindigkeit und relativ hoher Druckaufbaumöglichkeit.

Mechanische Verdrängerlader, die vom Verbrennungsmotor selbst oder von einem gesonderten Motor angetrieben sein können, fördern leicht die für den Leerlauf des Verbrennungsmotors benötigte Luft, können aber im Hochlast-Hochdrehzahl-Bereich des Verbrennungsmotors nicht mit einem Abgasturbolader konkurrieren. Deshalb ist es üblich, an einer Brennkraftmaschine die jeweiligen Vorteile eines Abgasturboladers und eines Verdränger-Kompressors durch eine Serienschaltung oder eine Parallelschaltung der beiden Lader zu kombinieren. Dies gilt insbesondere zur Bekämpfung des sogenannten Turbolochs, welches entsteht, wenn beim Anlaufen des Verbrennungsmotors ein alleiniger oder erster Abgasturbolader wegen des schleppend ansteigenden Abgasaufkommens nur langsam auf Touren kommt.

Eine aufgeladene Brennkraftmaschine der eingangs angeführten Art ist bereits aus der Publikation DE 102 35 701 B3 bekannt. Sie ermöglicht in Verbindung mit einer Leistungssteigerung, einem verbesserten Beschleunigungsverhalten im Anlaufbereich und einem übergangsharmonischen Betriebsspektrum von sehr niedriger Drehzahl bei Teillast und Volllast bis zu hoher Drehzahl bei Teillast und Volllast ein gestaffeltes Zu- und Abschalten von Abgasturboladern ohne die genannten Pumpeffekte. Sämtliche Abgasturbolader haben dort eingangsseitig an ihrem Verdichter eine Leitungsverbindung zum Ausgang des gemeinsamen Hilfskompressors, wodurch der leistungsmäßig kleinere Hilfskompressor in üblicher Weise dem jeweiligen Abgasturbolader in Serie vorgeordnet ist. Das schränkt jedoch die Verkleinerung des mechanischen Laders ein, weil er zeitweise gegen die nachfolgende Strömungsmaschine anarbeiten muß. Die ladeluftseitige Ventileinrichtung jedes Abgasturboladers befindet sich am Eingang des Verdichters und besteht aus einem Umgebungsluftventil und einem zum Hilfskompressor führenden Zuluftventil. Zum gegenläufigen Umsteuern dieser beiden Ventile sind aufwändige Regelventile erforderlich.

Der Erfindung liegt die Aufgabe zugrunde, an einer aufgeladenen Brennkraftmaschine der eingangs angeführten Gattung den baulichen Aufwand für den Hilfskompressor und die ladeluftseitigen Ventileinrichtungen zu verringern, das Schaltspiel der Ventileinrichtungen zu vereinfachen und den Ladeluftdruck der Brennkraftmaschine stärker zu stabilisieren.

Diese Aufgabe wird erfindungsgemaß dadurch gelöst, dass jede Ventileinrichtung ein zwischen dem Ladeluftausgang des Verdichters des Abgasturboladers und dem Ladeluftsammler eingefügtes Hauptluftventil und ein zwischen dem Ladeluftausgang des Verdichters und dem Hauptluftventil angeschlossenes und zum Lufteingang des Hilfskompressors führendes Hilfsluftventil aufweist und der Hilfskompressor ausgangsseitig an den Ladeluftsammler angeschlossen ist.

Durch die Platzierung des Hilfskompressors zwischen den Verdichtern der Abgasturbolader und dem Ladeluftsammler wird zwischenzeitlich Umgebungsluft durch den jeweiligen Verdichter hindurchgesaugt, so dass der Hilfskompressor trotz seiner serienmäßigen Anordnung in seiner Wirkung mit jedem in Betrieb befindlichen Abgasturbolader eine Parallelschaltung eingeht. Das Aussaugen des jeweiligen Verdichters stößt dort auf einen äußerst geringen Strömungswiderstand und erleichtert das Anlaufen dieses Verdichters beim Öffnen des zugehörigen Abgasventils. Der Hilfskompressor überwindet problemlos jedweden Gegendruck aus den anderen Ladeluftquellen, wogegen die Abgasturbolader nur in einem schmalen Drehzahlband optimal arbeiten. Für die aus je einem Hauptluftventil und einem Hilfsluftventil bestehenden Ventileinrichtungen ergibt sich der Vorteil, dass einfache Schaltventile statt komplizierterer Regelventile verwendet werden können. Der Rechner ist vorzugsweise auf eine Signalabgabe zum schlagartigen Ein-oder Ausschalten des von einem Elektromotor angetriebenen Hilfskompressors und der Schaltventile eingerichtet, wobei sich im Zielobjekt unterscheidende Schaltsignale gruppenweise zusammenlegen lassen.

Mit alledem wird das Ladegebläse nicht mehr nur zur Bekämpfung des sogenannten Turbolochs beim Anlaufen der Brennkraftmaschine und zur Kombination der Vorteile eines Verdrängerladers mit denen eines Strömungsladers eingesetzt, sondern auch zur Sicherung der Vorwärtsströmung in jedem der zeitlich versetzt hinzugeschalteten Abgasturbolader. Insbesondere bei einer Feinaufteilung des Betriebsspektrums der Brennkraftmaschine mittels zahlreicher Abgasturbolader kann man außer mit einer kleinen Bauform der Abgasturbolader zugleich mit einem besonders kleinen Hilfskompressor auskommen. Als gesonderter Motor des Hilfskompressors läßt sich ein Elektromotor verwenden, der seine Antriebsenergie aus einer elektrischen Fahrzeugbatterie bezieht. Ein solcher Motor läuft reaktionsschneller an als ein gesonderter Verbrennungsmotor oder eine Getriebeverbindung zum aufzuladenden Hauptmotor. Hinzu kommt, dass infolge der Aufteilung des Betriebsspektrums der Brennkraftmaschine mittels der Abgasturbolader beim Antrieb eines Kraftfahrzeugs auf einige Wechselgetriebestufen verzichtet werden kann, sich die Reihenfolge der Abgasturbolader in ihrer gestaffelten Inbetriebnahme hinsichtlich einer gleichmäßigen Abnutzung leicht ändern läßt und eine Störung in einem der Abgasturbolader durch dessen vorprogrammierte Ausklammerung überbrückbar ist.

Ein aufgrund der in den Unteransprüchen angegebenen Erfindungsausgestaltungen bevorzugtes Ausführungsbeispiel der Erfindung ist in der blockschaltbildartigen Zeichnung dargestellt und wird im folgenden näher beschrieben.

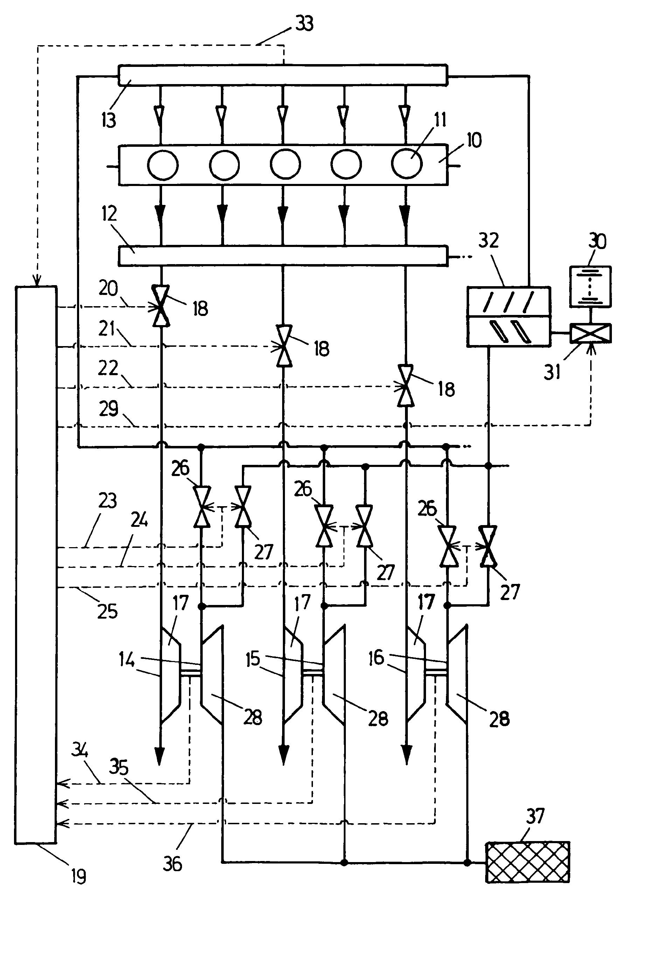

Die Zeichnung zeigt als Brennkraftmaschine 10 einen Fünfzylindermotor, um anzudeuten, dass es bei der Aufladeeinrichtung keine konzeptionelle Bindung an die Anzahl der mit Ladeluft zu versorgenden Zylinder 11 gibt. Durch je eine punktiert auslaufende Leitung am Abgassammler 12 der Brennkraftmaschine 10 und am Ladeluftsammler 13 der Brennkraftmaschine 10 ist kenntlich gemacht, dass außer den drei symbolisch wiedergegebenen Abgasturboladern 14, 15 und 16 noch viele weitere gestaffelt an- und abschaltbare Abgasturbolader zur Aufteilung des Betriebsspektrums der Brennkraftmaschine 10 vorgesehen sein können. In der Praxis wird man sich zumeist auf sechs bis zehn baugleiche Abgasturbolader beschränken, was einen Kompromiss zwischen der Feinheit der Aufteilung des Betriebsspektrums der Brennkraftmaschine 10 und dem baulichen Aufwand für die Aufladeeinrichtung der Brennkraftmaschine 10 darstellt.

An den Zylindern 11 der Brennkraftmaschine 10 sind durch helle Pfeilspitzen die Ladeluftströme und durch dunkle Pfeilspitzen die Abgasströme ausgewiesen. Zwischen dem Abgassammler 12 der Brennkraftmaschine 10 und der Abgasturbine 17 jedes Abgasturboladers 14, 15, 16 usw. ist ein Abgasventil 18 eingefügt, welches von dem mit einem abgespeicherten Anforderungsprofil ausgestatteten Rechner 19 individuell steuerbar ist. In der Zeichnung sind die betreffenden Steuerleitungen 20, 21 und 22 durch gestrichelte Linien wiedergegeben. Weitere derartige Steuerleitungen 23, 24 und 25 des Rechners 19 führen zu den ein Hauptluftventil 26 und ein Hilfsluftventil 27 enthaltenden Ventileinrichtungen am Luftauslass der Verdichter 28 der Abgasturbolader 14, 15 und 16. Noch eine andere Steuerleitung 29 verbindet den Rechner 19 mit dem seine Antriebsenergie aus einer elektrischen Fahrzeugbatterie 30 beziehenden relativ kleinen Elektromotor 31 des eingangsseitig mit sämtlichen Hilfsluftventilen 27 und ausgangsseitig mit dem Ladeluftsammler 13 verbundenen Hilfskompressor 32. Der mit einem abgespeicherten Anforderungsprofil ausgestattete Rechner 19 erhält über die Signalleitung 33 Drucksignale vom Ladeluftsammler 13 und über die Signalleitungen 34, 35 und 36 Drehzahlsignale von den Abgasturboladern 14, 15 und 16, denen ladeluftseitig ein gemeinsamer Luftfilter 37 vorgeordnet ist.

Dadurch, dass sämtliche Hauptluftventile 26, Hilfsluftventile 27 und Abgasventile 18 aus einer zwangsweisen Schließstellung aufsteuerbar eingerichtet sind, wird die Ladeluftversorgung der aufgeladenen Brennkraftmaschine 10 weiter vereinfacht. Zum Verringern des baulichen Aufwandes sind die Hauptluftventile 26 und die Hilfsluftventile 27 als Schaltventile und somit nicht als Regelventile ausgebildet. Um die Reaktionsschnelligkeit in der Änderung des Ladeluftbedarfs der Brennkraftmaschine 10 zu steigern und um den Rechner 19 zu entlasten ist beim vom Rechner 19 gesteuerten Hinzuschalten eines Abgasturboladers 14, 15, 16 usw. das Einschaltsignal des Hilfskompressors 32 mit dem Öffnungssignal des Abgasventils 18 des betroffenen Abgasturboladers zusammengelegt und ist das Ausschaltsignal des Hilfskompressors 32 mit dem Schließsignal des Hilfsluftventils 27 und mit dem Öffnungssignal des Hauptluftventils 26 dieses Abgasturboladers zusammengelegt. Desgleichen ist beim vom Rechner 19 gesteuerten Abschalten eines Abgasturboladers 14, 15, 16 usw. das Einschaltsignal des Hilfskompressors 32 mit dem Öffnungssignal des Hilfsluftventils 27 und mit dem Schließsignal des Hauptluftventils 26 des betroffenen Abgasturboladers zusammengelegt und ist das Ausschaltsignal des Hilfskompressors 32 mit dem Schließsignal des Hilfsluftventils 27 und mit dem Schließsignal des Abgasventils 18 dieses Abgasturboladers zusammengelegt.

Der über die Steuerleitung 29 vom Rechner 19 an- und abschaltbare Elektromotor 31 wird immer nur kurzfristig aktiviert, bis ein Rückwärtsströmen von Ladeluft über den jeweils hinzukommenden Abgasturbolader ausgeschlossen ist. In den Betriebspausen des Hilfskompressors 32 während des Betriebs der Brennkraftmaschine 10 kann die Fahrzeugbatterie 30 leicht von einem an die Brennkraftmaschine 10 angeschlossenen Generator nachgeladen werden. Zudem stehen inzwischen überaus leistungsstarke Fahrzeugbatterien 30 zur Verfügung, dass selbst bei recht großen Brennkraftmaschinen 10 die Anlaufschwäche eines hinzuzuschaltenden Abgasturboladers 14, 15 oder 16 durch den Hilfskompressor 32 äußerst zügig kompensiert werden kann.

Vorzugsweise ist der Betrieb des Hilfskompressors 32 über den Rechner 19 beim Hochfahren der Brennkraftmaschine 10 auf einen Startbereich des in der Folge aller gestaffelt eingesetzter Abgasturbolader 14, 15, 16 usw. jeweils betroffenen einen Abgasturboladers beschränkt, was den Hilfskompressor 32 schont und die elektrische Fahrzeugbatterie 30 entlastet. Zur Stabilisierung des im Ladeluftsammler 13 angestrebten Gleichdrucks durch Verminderung schlagartiger Abschaltvorgänge ist außerdem beim Herunterfahren der Brennkraftmaschine 10 der Betrieb des Hilfskompressors 32 über den Rechner 19 auf einen dem Startbereich entsprechenden Bereich des in der Schaltfolge aller gestaffelt eingesetzter Abgasturbolader 14, 15, 16 usw. jeweils betroffenen einen Abgasturboladers beschränkt.

Die Vorteile der beschriebenen Aufladeeinrichtung sind besonders augenfällig, wenn die Brennkraftmaschine 10 als Dieselmotor mit einer auf etwa 8 : 1 stark reduzierten Verdichtung ausgebildet ist. Die eigentliche Brennkraftmaschine 10 lässt sich dann bei gleicher Leistung enorm verkleinern. Die zahlreichen Abgasturbolader 14, 15, 16 usw. erbringen leicht das relativ hohe fehlende Ladegewicht, wobei der in erweiterter Funktion als Ladeluftstütze eingesetzte Hilfskompressor 32 ebenfalls erheblich verkleinert werden kann. Die Verkleinerung des Hilfskompressors 32 beruht bei alledem nicht nur auf der Vielzahl von Abgasturboladern und seinem Kurzzeitbetrieb, sondern auch auf dem Umstand, dass er seine Luft aus einer Strömungsmaschine absaugt und nicht gegen eine solche anarbeiten muss.

## Patentansprüche

1. Aufgeladene Brennkraftmaschine mit einem Abgassammler (12) und einem Ladeluftsammler (13) jeweils für sämtliche Brennräume, mehreren in Abhängigkeit von der Leistung der Brennkraftmaschine gestaffelt mit ihrer Abgasturbine (17) an den Abgassammler (12) über je ein Abgasventil (18) anschaltbaren und abschaltbaren Abgasturboladern (14, 15, 16), einem von einem gesonderten Motor (31) angetriebenen Hilfskompressor (32), Ventileinrichtungen zum Umsteuern der Überbrückungsluft des Hilfskompressors (32) und der Verdichterluft des im Staffelbetrieb hinzutretenden jeweiligen Abgasturboladers (14, 15, 16) in Abhängigkeit von der Drehzahl dieses Abgasturboladers und dem Ladeluft-Arbeitsdruck und mit einem Rechner (19) mit abgespeichertem Anforderungsprofil zum Schalten der Abgasventile (18), der Ventileinrichtungen und des Motors (31) des Hilfskompressors (32), **dadurch gekennzeichnet, dass** jede Ventileinrichtung ein zwischen dem Ladeluftausgang des Verdichters (28) des Abgasturboladers (14, 15, 16) und dem Ladeluftsammler (13) eingefügtes Hauptluftventil (26) und ein zwischen dem Ladeluftausgang des Verdichters (28) und dem Hauptluftventil (26) angeschlossenes und zum Lufteingang des Hilfskompressors (32) führendes Hilfsluftventil (27) aufweist und der Hilfskompressor (32) ausgangsseitig an den Ladeluftsammler (13) angeschlossen ist.

2. Brennkraftmaschine nach Anspruch 1, **dadurch gekennzeichnet, dass** sämtliche Hauptluftventile (26), Hilfsluftventile (27) und Abgasventile (18) aus einer zwangsweisen Schließstellung aufsteuerbar eingerichtet sind.

3. Brennkraftmaschine nach Anspruch 1 oder 2, **dadurch gekennzeichnet, dass** die Hauptluftventile (26) und die Hilfsluftventile (27) als Schaltventile und somit nicht als Regelventile ausgebildet sind.

4. Brennkraftmaschine nach einem der Ansprüche 1 bis 3, **dadurch gekennzeichnet, dass** beim vom Rechner (19) gesteuerten Hinzuschalten eines Abgasturboladers (14, 15, 16) das Einschaltsignal des Hilfskompressors (32) mit dem Öffnungssignal des Hilfsluftventils (27) und mit dem Öffnungssignal des Abgasventils (18) des betroffenen Abgasturboladers zusammengelegt ist und das Ausschaltsignal des Hilfskompressors (32) mit dem Schließsignal des Hilfsluftventils (27) und mit dem Öffnungssignal des Hauptluftventils (26) dieses Abgasturboladers zusammengelegt ist.

5. Brennkraftmaschine nach Anspruch 4, **dadurch gekennzeichnet, dass** beim vom Rechner (19) gesteuerten Abschalten eines Abgasturboladers (14, 15, 16) das Einschaltsignal des Hilfskompressors (32) mit dem Öffnungssignal des Hilfsluftventils (27) und mit dem Schließsignal des Hauptluftventils (26) des betroffenen Abgasturboladers zusammengelegt ist und das Ausschaltsignal des Hilfskompressors (32) mit dem Schließ signal des Hilfsluftventils (27) und mit dem Schließsignal des Abgasventils (18) dieses Abgasturboladers zusammengelegt ist.
